# EUROPEAN PATENT SPECIFICATION

(11) **EP 3 446 874 B1**
(45) Date of publication and mention of the grant of the patent: **06.10.2021**
(21) Application number: 18189058.3
(22) Date of filing: 14.08.2018
(51) Int. Cl.: B32B 43/00

(54) **SEPARATING ADHESIVELY BONDED LAP JOINTS**
TRENNUNG ZUSAMMENGEKLEBTER ÜBERLAPPUNGSVERBINDUNGEN
SÉPARATION DE JOINTS À RECOUVREMENT COLLÉS PAR ADHÉSIF

(30) Priority: 25.08.2017 US 201715687121
(43) Date of publication of application: 27.02.2019
(73) Proprietor: Raytheon Technologies Corporation, Farmington, CT 06032 (US)
(72) Inventor: BOGUE, William, Hebron, CT 06248 (US); RIEHL, John D., Hebron, CT 06248 (US); HARNER, John, Vernon, CT 06066 (US); WIGELL, Gary A., Lansing, MI 48917 (US); PHILLIPS, Jeffrey Ian, Roswell, GA 30075 (US); RUGLIO, Anthony G., Rocky Hill, CT 06067 (US)
(74) Representative: Dehns

(56) References cited:
- WO-A1-2014/141311
- WO-A2-2011/036373
- US-A1- 2007 023 142
- US-A1- 2011 211 965
- US-A1- 2013 048 224
- US-A1- 2017 370 223
- Takayuki Shimoda ET AL: "Study of Cryogenic Mechanical Strength and Fracture Behavior of Adhesives for CFRP Tanks of Reusable Launch Vehicles", , 1 March 2006 (2006-03-01), pages 55-70, XP055531513, Retrieved from the Internet: URL:https://www.researchgate.net/publicati on/31900776_Study_of_Cryogenic_Mechanical_ Strength_and_Fracture_Behavior_of_Adhesive s_for_CFRP_Tanks_of_Reusable_Launch_Vehicl es
- SUN-MIN KIM ET AL: "A Comparison of Adhesive Tape-Separation Methods from Surfaces; Dipping in Liquid Nitrogen, Liquid Nitrogen Spray and an Adhesive Neutralizer Method", JOURNAL OF FORENSIC RESEARCH, vol. 07, no. 05, 1 January 2016 (2016-01-01), XP055531519, DOI: 10.4172/2157-7145.1000346
- Khaled Giasin: "Machining Fibre Metal Laminates and Al2024-T3 aluminium alloy", , 19 January 2017 (2017-01-19), XP055531528, Retrieved from the Internet: URL:http://etheses.whiterose.ac.uk/16061/1 /PhD%20thesis.pdf

## Description

### FIELD

The present disclosure relates to lap joints, and more specifically, to methods of separating adhesively bonded lap joints.

### BACKGROUND

Mechanical separation of two components that are adhesively bonded together generally is destructive to one or both components. For example, mechanically separating a sheath from an airfoil often damages both the sheath and the airfoil to such an extent that either the parts need extensive restoration in order to be salvaged or both parts are extensively damaged such that neither part is re-usable. Various method for adhesively bonding compoents are known, for example from US2013/048224 and WO2014/141311.

### SUMMARY

According to a first aspect, there is provided a method of separating a lap joint assembly according to claim 1. The method includes positioning a fluid emitter relative to the lap joint assembly, wherein the lap joint assembly comprises an adhesive lap joint between a first component and a second component. The method further includes emitting a cryogenic fluid stream from the fluid emitter at the adhesive lap joint by focusing the cryogenic fluid stream at the adhesive lap joint. Positioning the fluid emitter and emitting the cryogenic fluid stream includes orienting the fluid emitter such that an angle between the cryogenic fluid stream and the adhesive lap joint is less than 45 degrees.

In various embodiments, positioning the fluid emitter and emitting the cryogenic fluid stream include orienting the fluid emitter such that the angle between the cryogenic fluid stream and the adhesive lap joint is less than 30 degrees. In various embodiments, positioning the fluid emitter and emitting the cryogenic fluid stream include orienting the fluid emitter such that the angle between the cryogenic fluid stream and the adhesive lap joint is less than 20 degrees. In various embodiments, the method also includes positioning a deflector relative to the lap joint assembly such that the cryogenic fluid stream diverts off the deflector before impinging the adhesive lap joint. In various embodiments, the deflector has a curved deflection surface to facilitate focusing the cryogenic fluid stream at the adhesive lap joint. In various embodiments, the cryogenic fluid stream comprises liquid nitrogen. In various embodiments, the first component is an airfoil body and the second component is a sheath disposed along a leading edge of the airfoil body.

Also disclosed herein, according to various embodiments, is a method of repairing an airfoil assembly. The method may include positioning a fluid emitter relative to an airfoil body, wherein a sheath is adhesively bonded to the airfoil body via an adhesive lap joint. The method may also include emitting a cryogenic fluid stream from the fluid emitter at the adhesive lap joint. Still further, the method may include, in response to removing at least a portion of adhesive material from the adhesive lap joint via the emitting the cryogenic fluid stream, mechanically removing the sheath from the airfoil body. Also, the method may include, in response to removing the sheath from the airfoil body, adhesively bonding a replacement sheath to the airfoil body.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a cross-sectional view of an exemplary gas turbine engine, in accordance with various embodiments;
FIG. 2 is a perspective, exploded view of an airfoil, in accordance with various embodiments;
FIG. 3 is a perspective view of a sheath bonded to a leading edge of an airfoil, in accordance with various embodiments;
FIG. 4A is a schematic view of a cryogenic fluid stream directed at an adhesive lap joint, in accordance with various embodiments;
FIG. 4B is a schematic depiction of a cryogenic fluid stream diverting off of a deflector towards an adhesive lap joint, in accordance with various embodiments;
FIG. 5 is a schematic flow chart diagram of a method of separating a lap joint assembly, in accordance with various embodiments;
FIG. 6 is a schematic flow chart diagram of a method of separating a sheath from an airfoil body; and
FIG. 7 is a schematic flow chart diagram of a method of repairing an airfoil assembly, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure. Thus, the detailed description herein is presented for purposes of illustration only and not of limitation.

There are various reasons why nondestructively separating two components that have been joined together via an adhesive lap joint would be beneficial. For example, if the components were improperly aligned during assembly or if the adhesive didn't properly bond to the components, it may be desirable to separate the two components with at least one of the components remaining sufficiently intact for re-use. Accordingly, disclosed herein, is a nondestructive method for separating adhesively bonded lap joints that tends to preserve at least one of the two bonded components undamaged (or with minimal damage) so that the undamaged component can be re-used/re-deployed, according to various embodiments. For example, the method(s) described herein may be utilized to separate a sheath from an airfoil body, in response to a manufacturing defect or damage occurring during use that allows for the airfoil body to be re-used. While numerous details are included herein pertaining to separating an adhesive lap joint between a sheath and an airfoil body of a gas turbine engine, the scope of the present disclosure is not limited to airfoils of gas turbine engines. Thus, the separating method provided herein may be utilized with a variety of adhesively bonded joint assemblies.

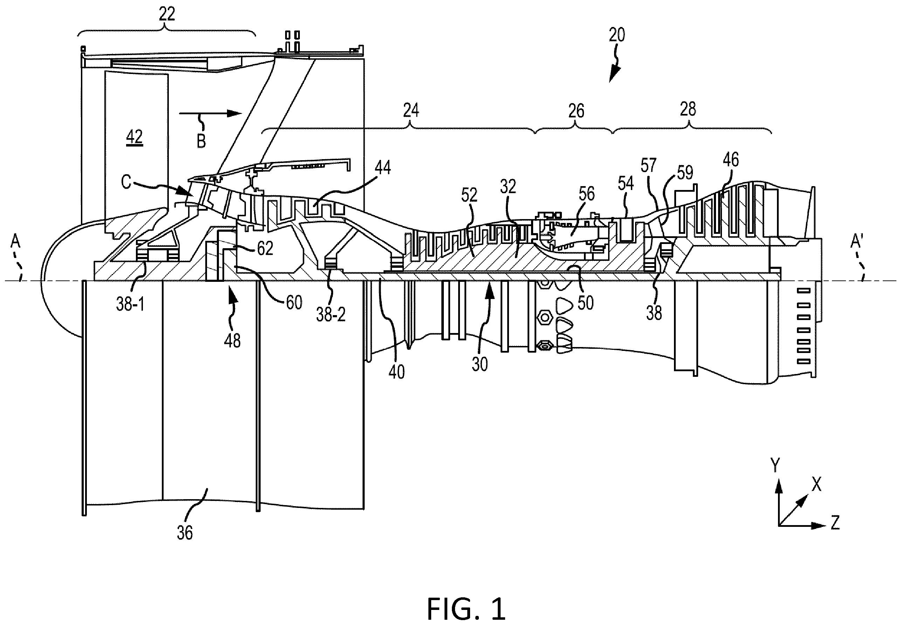

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive fluid (e.g., air) along a bypass flow-path B while compressor section 24 can drive fluid along a core flow-path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, and 38-2. Engine central longitudinal axis A-A' is oriented in the z direction (axial direction) on the provided xyz axis. The y direction on the provided xyz axis refers to radial directions and the x direction on the provided xyz axis refers to the circumferential direction. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54.

A combustor 56 may be located between high pressure compressor 52 and high pressure turbine 54. The combustor section 26 may have an annular wall assembly having inner and outer shells that support respective inner and outer heat shielding liners. The heat shield liners may include a plurality of combustor panels that collectively define the annular combustion chamber of the combustor 56. An annular cooling cavity is defined between the respective shells and combustor panels for supplying cooling air. Impingement holes are located in the shell to supply the cooling air from an outer air plenum and into the annular cooling cavity.

A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 and then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

Airfoils, such as rotor blades and stator vanes, are often utilized in various sections of gas turbine engines to direct, condition, and affect the flow of fluids (e.g., air and/or combustion gases) through the gas turbine engine. Some airfoils, such as fan blades, often include one or more sheaths or cover panels that are bonded to the airfoil body. If the bonded joints in such airfoils were to be compromised, either due to an identified manufacturing defect or due to damage that occurs during use (e.g., a bird strike), the provided method allows for the adhesive lap joint to be separated and for at least the airfoil body to be re-used/repaired.

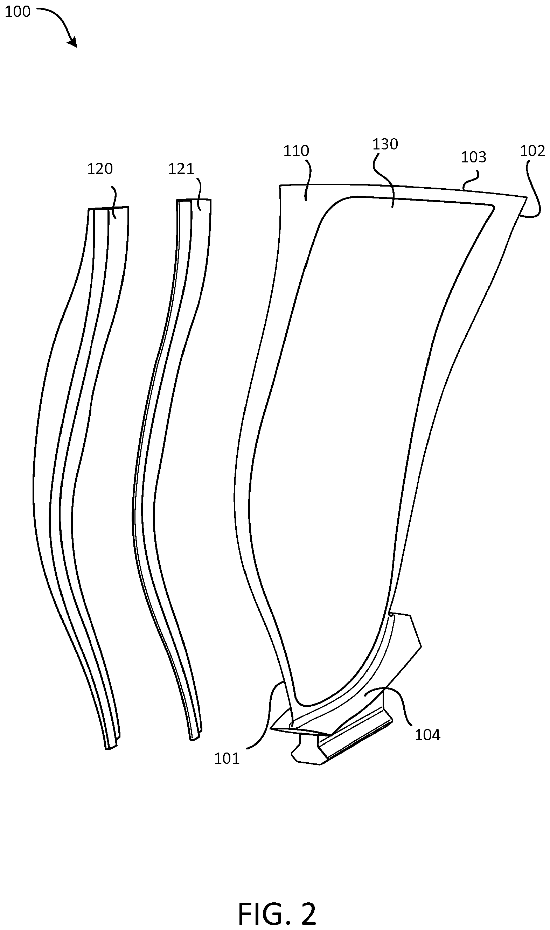

With reference to FIG. 2, an airfoil assembly 100 having a body 110 is disclosed. The airfoil assembly 100 may include a hub end 104 for attaching the airfoil assembly 100 to a disk of a rotor system. The airfoil assembly 100 may also have a radially outer edge or tip 103 located radially outward from the hub end 104. The airfoil assembly 100 may have a leading edge 101 opposite a trailing edge 102. In various embodiments, the airfoil assembly 100 may further include a generally concave pressure surface and a generally convex suction surface joined together at the respective leading edge 101 and trailing edge 102. The airfoil assembly 100 may be curved and twisted relative to, for example, a plane extending radially from the disk, in terms of the overall geometry of the airfoil assembly 100.

It will be noted that airfoils for gas turbine engines may be provided in the variety of sizes, shapes and geometries. Accordingly, the airfoil assembly 100 of the present disclosure is not limited to the specific geometry, size, and shape shown in the figures. Further, as mentioned above, the disclosed airfoil assembly 100 is not necessarily limited to the fan section 22 of a gas turbine engine 20, but instead may be implemented in other sections of the gas turbine engine 20 and/or may be adapted for use in other types of jet engines, propellers, rotors, etc. In various embodiments, the body 110 of the airfoil assembly 100 may be fabricated from a metallic material, such as a metal and/or a metal alloy. In various embodiments, for example, the body 110 of the airfoil assembly 100 may be fabricated from aluminum, an aluminum alloy, titanium, and/or a titanium alloy, among other suitable metallic materials.

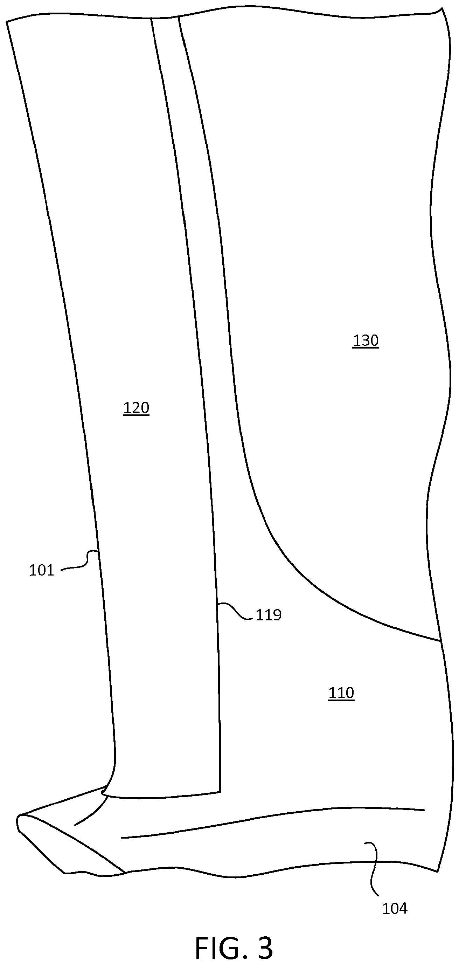

With reference to FIG. 2 and 3, and in accordance with various embodiments, the airfoil assembly 100 may include a sheath 120 coupled to the leading edge 101 of the body 110. The sheath 120 may prevent excessive damage to the airfoil assembly 100 in the event of a bird strike or other foreign matter. In various embodiments, the sheath 120 may be fabricated from a metallic material, such as a metal and/or a metal alloy. In various embodiments, for example, the sheath 120 may be fabricated from titanium and/or a titanium alloy, among other suitable metallic materials. In various embodiments, the sheath 120 may be coupled to the body 110 using an adhesive 121. For example, the adhesive 121 may be an epoxy adhesive or a urethane adhesive. In various embodiments, the adhesive 121 may comprise, for example, one or more epoxies, bismalemides, cyanate esters, urethane-based adhesives, polyurethanes, silicones, or polyimides, and may be a supported or unsupported film and/or paste.

In various embodiments, the body 110 of the airfoil assembly 100 may be made from a first metallic material and the sheath 120 may be made from a second metallic material. In various embodiments one or both of the body 110 and the sheath 120 may be made from composite materials. In various embodiments, a cover 130 may be attached to the airfoil body 110. In various embodiments, the cover 130 may be fabricated from a composite material such as carbon fiber, fiber-reinforced polymer (e.g., fiber glass), para-aramid fiber, and/or aramid fiber. In various embodiments, the cover 130 may be fabricated from a fiber metal laminate ("FML"). For example, the cover 130 may include metal layers comprising titanium and/or a titanium alloy and the composite material layers in the FML may comprise carbon fiber, such as graphite fiber. An FML comprising titanium and/or a titanium alloy and graphite fiber is commonly known in the industry as "TiGr." In various embodiments, in which an FML comprises metal layers comprising aluminum and/or an aluminum alloy, the composite material layers in the FML may comprise fiber-reinforced polymer (e.g., fiber glass), para-aramid fiber, and/or aramid fiber. An FML comprising aluminum and/or an aluminum alloy and fiber glass is commonly known by the industry standard designation of "GLARE." Though FMLs described above include specific examples of metals, metal alloys, and/or composite materials, it would not be outside the scope of this disclosure to include any FML comprising any metal, metal alloy, and/or composite material, in any arrangement of layers.

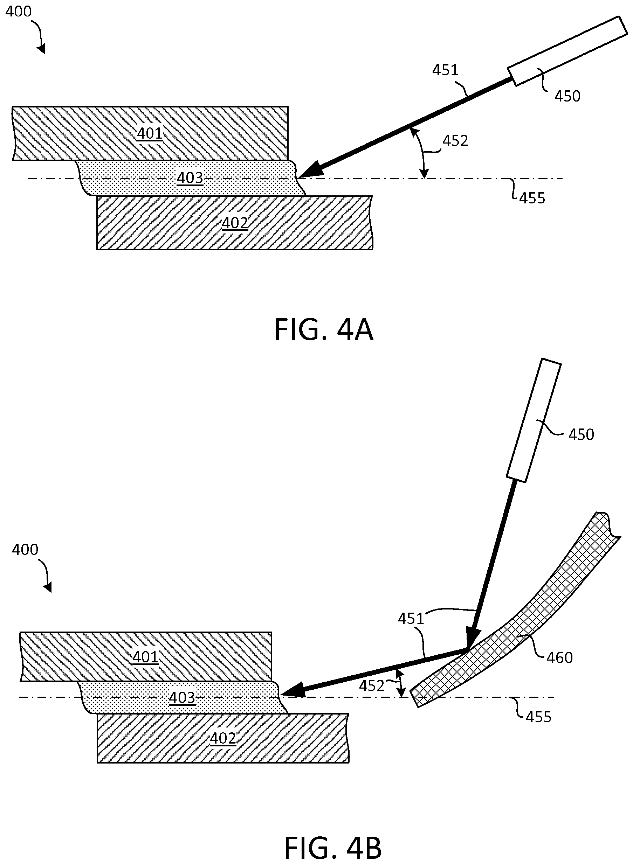

In various embodiments, and with reference to FIGS. 4A, schematic depictions of methods of separating a lap joint assembly 400 are provided. The lap joint assembly 400 may be the airfoil assembly described above, or the lap joint assembly 400 may be a different type of assembly. The lap joint assembly 400 includes an adhesive lap joint 403 between a first component 401 and a second component 402. The relative sizes, shapes, and geometries of the layers 401, 402, 403 of the lap joint assembly 400 are not necessarily represented to scale in FIGS. 4A and 4B, as FIGS. 4A and 4B are schematic depictions of the separation method.

In various embodiments, and with reference to FIG. 4A, a fluid emitter 450, such as a liquid jetting apparatus, may be configured to emit a cryogenic fluid stream 451 at the adhesive lap joint 403 between the two components 401, 402. The cryogenic fluid stream 451 may be liquid nitrogen or other similar cryogenic liquids. According to various embodiments, there are several benefits of using cryogenic fluids, instead of standard, nominal temperature liquids. For example, by using a cryogenic liquid, the process waste stream is reduced as most of the cryogenic liquid emitted at the adhesive lap joint 403 vaporizes shortly after impingement. This vaporization also helps to expand the adhesive lap joint 403, thereby further facilitating separation of the lap joint assembly 400, according to various embodiments. Still further, in various embodiments, a difference in the thermal expansion of the first and second components 401, 402 (e.g., a difference in the coefficients of thermal expansion of the two components 401, 402) contributes to the effectiveness of the cryogenic fluid stream 451, as the thermal expansion mismatch between the two components 401, 402 imparts substantial strain across the adhesive lap joint 403, thereby further facilitating separation of the lap joint assembly 400.

In various embodiments, the cryogenic fluid stream 451 is substantially non-abrasive. Accordingly, the structural integrity of the components 401, 402 may be maintained because the cryogenic fluid stream 451 is not utilizing conventional solid particle abrasion to wear away the adhesive. For brittle adhesive materials, such as epoxy and phenolic adhesives, the fluid stream may be somewhat erosive via the fluid stream impacting the target area, creating fractures in the brittle adhesive until the area exfoliates. In various embodiments, debris does not build at the site of impact (which could insulate/shield the areas not yet damaged) because the fluid stream flushes away the exfoliated material. For both elastomeric adhesive materials and brittle adhesive materials, the components 401, 402 may be exposed to tensile forces, in addition to directing the cryogenic fluid stream at the adhesive lap joint 403. Because the lap joint 403 has higher shear strength than tensile strength, the integrity of the lap joint 403 may be diminished.

In various embodiments, in response to chilling the adhesive via the cryogenic fluid stream, the resilience and/or adhesion properties of the adhesive material is diminished so that it fails more preferentially. In various embodiments, many adhesive materials go thru one or more ductile to brittle transitions in response to being exposed to the temperatures of the cryogenic fluid stream 451. In various embodiments, thermally induced strain facilitates separation of the lap joint assembly 400. For example, the chilling of the lap joint assembly 400 produces thermal strains, both between the adhesive and the components 401, 402 and within the adhesive material itself. In various embodiments, the more-brittle adhesive is less able to sustain those strains and thus separation is facilitated. In various embodiments, in response to injecting the cryogenic fluid stream 451 into the tight space of the lap joint 403, the expansion associated with the transition from a liquid to a vapor also induces extra opening loads on the joint (in flatwise and in peel) that further facilitate the separation.

As mentioned above, the procedure of the present disclosure may also be utilized with GLARE and TIGR materials. While the fibers in these systems may be not be as easily fractured, the incidence angle 452, as described further below, can be selected in order to minimize/reduce undercutting of the fibers. The pressure and/or intensity of the cryogenic fluid stream 451 may also be reduced versus those utilized with metallic assemblies. In various embodiments, in response to the fibers loosening, the fibers contribution as a break wall will be reduced or eliminated, causing the material to exfoliate.

In various embodiments, the pressure of the cryogenic fluid is between about 12,000 psi (80 megapascals) and about 52,000 psi (360 megapascals). In various embodiments, the pressure of the cryogenic fluid is about 20,000 psi (140 megapascals). As used in this context only, the term "about" refers to plus or minus 10% of the indicated value. In various embodiments, a nozzle having a single orifice or multiple orifices may be utilized. The nozzle may be nonrotating or may be configured to rotate up to 80 rotations per minute. The nozzle may be positioned about 0.10 inches to about 0.75 inches away from the lap joint. As used in this context only, the term "about" refers to plus or minus 5% of the indicated value.

In various embodiments, the fluid emitter 450 is oriented and positioned so as to direct the cryogenic fluid stream 451 at a shallow angle 452 relative to the adhesive lap joint 403. The adhesive lap joint 403, according to various embodiments, has a joint axis 455 that extends centrally through the adhesive layer and parallel to the respective surfaces of the adjoining components 401, 402. The angle 452 of the cryogenic fluid stream 451 emitted from the fluid emitter 450 is relative to the joint axis 455, according to various embodiments. Accordingly, when the fluid emitter 450 is utilized to separate the sheath 120 from the airfoil body 110 (with momentary reference to FIGS. 2 and 3), the adjoining surfaces of the sheath 120 and the airfoil body 110 may be curved and thus the joint axis may have a corresponding curvature. Thus, in various embodiments, the position and/or orientation of the fluid emitter 450 may be adjusted to maintain a desired angle 452 between the emitted cryogenic fluid stream 451 and the joint axis 455 as the adhesive is removed from the joint and the separation advances.

In various embodiments, the angle 452 is less than 45 degrees. In various embodiments, the angle 452 is less than 30 degrees. In various embodiments, the angle 452 is less than 20 degrees. In various embodiments, and with reference to FIG. 4B, a deflector 460 may be utilized to facilitate achieving the desired angle 452. The deflector 460 may be configured to divert the cryogenic fluid stream 451 to have a desired angle 452 relative to the joint axis 455. Accordingly, before impinging the adhesive lap joint 403, the cryogenic fluid stream diverts off the deflector 460. The deflector 460 may also be configured to focus the cryogenic fluid stream, further improving the precision of the impingement. In various embodiments, the deflector 460 has a curved deflection surface. In various embodiments, the deflector 460 may be configured to closely match the surface adjacent to the lap joint (i.e. a sheet on the lower substrate). In various embodiments, a very shallow angle 452 causes the center of the cone to be angled away from the lower component and the aggressive edge of the cone can be feathered so that it just clips the adhesive. Said differently, because fluid jet streams generally have a conical shape (i.e., stream divergence increases with distance from outlet/nozzle), the fluid emitter 450 may be oriented and configured to emit the cryogenic fluid stream 451 so that only a portion (e.g., a lower edge) of the conical jet targets the adhesive lap joint 403, thus preventing erosion of at least one of the first and second component 401, 402. This type of jet stream targeting may be referred to herein as "feathering." Such a procedure may be less efficient, but may have the greatest likelihood for separating lap joint/laminate assemblies, due in part because the aggressive part of the fluid "cone" can be largely kept from directly impacting the lower component.

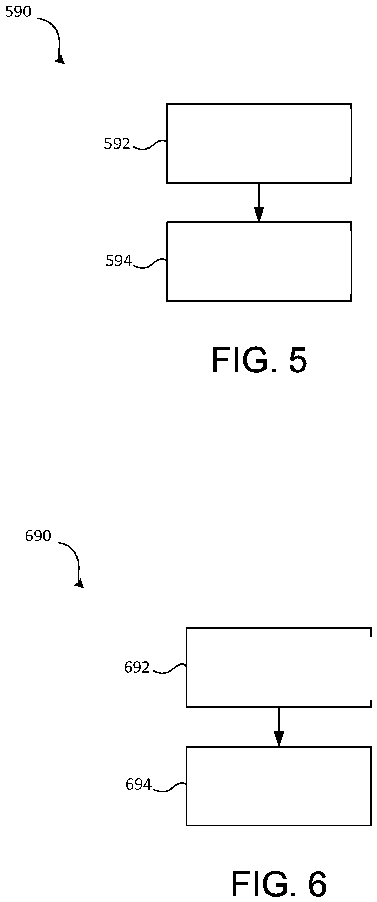

In various embodiments, and with reference to FIG. 5, a method 590 of separating a lap joint assembly is provided. The method 590 may include positioning the fluid emitter 450 relative to the lap joint assembly 400 at step 592 and emitting the cryogenic fluid stream 451 at the adhesive lap joint 403 at step 594. The lap joint assembly 400 comprises the adhesive lap joint 403 disposed between the first and second components 401, 402. Positioning the fluid emitter 450 may include orienting the fluid emitter 450 such that the cryogenic fluid stream 451 is directed at desired angle 452 relative to the joint axis 455.

In various embodiments, and with reference to FIG. 6, a method 690 of separating a sheath 120 from an airfoil body 110 is provided. The method 690 may include positioning the fluid emitter 450 relative to the airfoil body 110 at step 692 and emitting the cryogenic fluid stream 451 at the adhesive lap joint 119 (with momentary reference to FIG. 3) at step 694. Adhesive lap joint 119 has an adhesive compound disposed between the sheath 120 and the airfoil body 110. In various embodiments, the sheath 120 extends along (and may form) the leading edge 101 of the airfoil assembly 100.

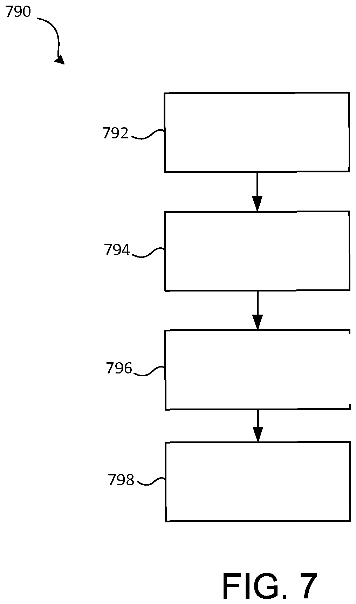

In various embodiments, and with reference to FIG. 7, a method 790 of repairing the airfoil assembly 100 is provided. The method 790 may include positioning the fluid emitter 450 relative to the airfoil body 110 at step 792 and emitting the cryogenic fluid stream 451 at the adhesive lap joint 119 (FIG. 3) at step 794. The method 790 may further include mechanically removing the sheath 120 from the airfoil body 110 at step 796 and adhesively bonding a replacement sheath to the airfoil body 110 at step 798. In various embodiments, step 796 is performed in response to removing at least a portion of the adhesive material from the adhesive lap joint 119 (FIG. 3). For example, the cryogenic fluid stream 451 may separate the adhesive bond up until the point when the cryogenic fluid stream 451 is obstructed and/or is otherwise unable to directly impinge the adhesive material in the adhesive lap joint 119. Accordingly, the cryogenic fluid stream 451 may be utilized to break down the adhesive lap joint to the point at which the shear strength of the adhesive lap joint has diminished sufficiently to allow for mechanical removal of the sheath 120.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it may be within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of separating a lap joint assembly (100, 400), the method comprising:
positioning a fluid emitter (450) relative to the lap joint assembly (100, 400), wherein the lap joint assembly (100, 400) comprises an adhesive lap joint (119, 403) between a first component (401, 110) and a second component (402, 112); and
emitting a cryogenic fluid stream (451) from the fluid emitter (450) at the adhesive lap joint (403) by focusing the cryogenic fluid stream (451) at the adhesive lap joint (119, 403);
wherein positioning the fluid emitter (450) and emitting the cryogenic fluid stream (451) comprise orienting the fluid emitter (450) such that an angle between the cryogenic fluid stream (451) and the adhesive lap joint (119, 403) is less than 45 degrees.

2. The method of claim 1, wherein emitting the cryogenic fluid stream (451) comprises feathering the cryogenic fluid stream (451) so as to mitigate erosion of at least one of the first component (401, 110) and the second component (402, 112).

3. The method of claim 1 or 2, wherein the first component is an airfoil body (110) and the second component is a sheath (120) disposed along a leading edge of the airfoil body (110).

4. A method according to claim 3, wherein the sheath (112) is adhesively bonded to the airfoil (110) body via the adhesive lap joint (119, 403); and
wherein the fluid emitter (450) is positioned relative to the airfoil body (110).

5. The method of claim 1, wherein positioning the fluid emitter (450) and emitting the cryogenic fluid stream (451) comprise orienting the fluid emitter (450) such that the angle between the cryogenic fluid stream (451) and the adhesive lap joint (119, 403) is less than 30 degrees.

6. The method of claim 1, wherein positioning the fluid emitter (450) and emitting the cryogenic fluid stream (451) comprise orienting the fluid emitter (450) such that the angle between the cryogenic fluid stream (451) and the adhesive lap joint (119, 403) is less than 20 degrees.

7. The method of any preceding claim, wherein the method further comprises positioning a deflector (460) relative to the lap joint assembly (100, 400) such that the cryogenic fluid stream (451) diverts off the deflector (460) before impinging the adhesive lap joint (119, 403).

8. The method of claim 7, wherein the deflector (460) has a curved deflection surface to facilitate focusing the cryogenic fluid stream (451) at the adhesive lap joint (119, 403).

9. The method of any preceding claim, wherein a pressure of the cryogenic fluid is between about 12,000 psi (80 megapascals) and about 52,000 psi (360 megapascals).

10. The method of any preceding claim, wherein the cryogenic fluid stream (451) comprises liquid nitrogen.

11. The method of any preceding claim, wherein the sheath (112) and the airfoil body (110) have different thermal expansion characteristics.

12. A method of repairing an airfoil assembly (100), comprising the method according to claim 4, and further comprising
mechanically removing the sheath (112) from the airfoil body (110); and
adhesively bonding a replacement sheath (112) to the airfoil body (110).

## Patentansprüche

1. Verfahren zum Trennen einer Überlappungsverbindungsbaugruppe (100, 400), wobei das Verfahren Folgendes umfasst:
Positionieren eines Fluidausgebers (450) bezogen auf die überlappungsverbindungsbaugruppe (100, 400), wobei die Überlappungsverbindungsbaugruppe (100, 400) eine haftenden Überlappungsverbindung (119, 403) zwischen einer ersten Komponente (401, 110) und einer zweiten Komponente (402, 112) umfasst; und
Ausgeben eines kryogenen Fluidstroms (451) von dem Fluidausgeber (450) an die haftende Überlappungsverbindung (403) durch ein Fokussieren des kryogenen Fluidstroms (451) an der haftenden Überlappungsverbindung (119, 403);
wobei ein Positionieren des Fluidausgebers (450) und ein Ausgeben des kryogenen Fluidstroms (451) ein Ausrichten des Fluidausgebers (450) umfasst, so dass ein Winkel zwischen dem kryogenen Fluidstrom (451) und der haftenden Überlappungsverbindung (119, 403) weniger als 45 Grad beträgt.

2. Verfahren nach Anspruch 1, wobei ein Ausgeben des kryogenen Fluidstroms (451) ein Federn des kryogenen Fluidstroms (451) umfasst, um eine Erosion von mindestens einer der ersten Komponente (401, 110) und der zweiten Komponente (402, 112) abzuschwächen.

3. Verfahren nach Anspruch 1 oder 2, wobei die erste Komponente ein Schaufelprofilkörper (110) ist und die zweite Komponente ein Mantel (120) ist, welcher entlang einer Vorderkante des Schaufelprofilkörpers (110) angeordnet ist.

4. Verfahren nach Anspruch 3, wobei der Mantel (112) über die haftende Überlappungsverbindung (119, 403) haftend an den Schaufelprofilkörper (110) gebunden ist; und
wobei der Fluidausgeber (450) auf den Schaufelprofilkörper (110) bezogen positioniert ist.

5. Verfahren nach Anspruch 1, wobei ein Positionieren des Fluidausgebers (450) und ein Ausgeben des kryogenen Fluidstroms (451) ein Ausrichten des Fluidausgebers (450) umfasst, so dass der Winkel zwischen dem kryogenen Fluidstrom (451) und der haftenden Überlappungsverbindung (119, 403) weniger als 30 Grad beträgt.

6. Verfahren nach Anspruch 1, wobei ein Positionieren des Fluidausgebers (450) und ein Ausgeben des kryogenen Fluidstroms (451) ein Ausrichten des Fluidausgebers (450) umfasst, so dass der Winkel zwischen dem kryogenen Fluidstrom (451) und der haftenden Überlappungsverbindung (119, 403) weniger als 20 Grad beträgt.

7. Verfahren nach einem der vorstehenden Ansprüche, wobei das Verfahren ferner ein Positionieren eines Deflektors (460) bezogen auf die Überlappungsverbindungsbaugruppe (100, 400) umfasst, so dass der kryogene Fluidstrom (451) von dem Deflektor (460) umgelenkt wird, bevor er auf die haftende Überlappungsverbindung (119, 403) aufprallt.

8. Verfahren nach Anspruch 7, wobei der Deflektor (460) eine gekrümmte Deflektionsfläche aufweist, um ein Fokussieren des kryogenen Fluidstroms (451) an der haftenden Überlappungsverbindung (119, 403) zu erleichtern.

9. Verfahren nach einem der vorstehenden Ansprüche, wobei ein Druck des kryogenen Fluids zwischen etwa 12,000 psi (80 Megapascal) und etwa 52,000 psi (360 Megapascal) beträgt.

10. Verfahren nach einem der vorstehenden Ansprüche, wobei der kryogene Fluidstrom (451) flüssigen Stickstoff umfasst.

11. Verfahren nach einem der vorstehenden Ansprüche, wobei der Mantel (112) und der Schaufelprofilkörper (110) unterschiedliche Wärmeausdehnungseigenschaften aufweisen.

12. Verfahren zum Reparieren einer Schaufelprofilbaugruppe (100), umfassend das Verfahren nach Anspruch 4, und ferner umfassend ein
mechanisches Entfernen des Mantels (112) von dem Schaufelprofilkörper (110); und ein
haftendes Binden eines Ersatzmantels (112) an den Schaufelprofilkörper (110).

## Revendications

1. Procédé de séparation d'un ensemble de joints à recouvrement (100, 400), le procédé comprenant :
le positionnement d'un émetteur de fluide (450) par rapport à l'ensemble de joints à recouvrement (100, 400), dans lequel l'ensemble de joints à recouvrement (100, 400) comprend un joint à recouvrement adhésif (119, 403) entre un premier élément (401, 110) et un second élément (402, 112) ; et
l'émission d'un courant de fluide cryogénique (451) depuis l'émetteur de fluide (450) au niveau du joint à recouvrement adhésif (403) en concentrant le courant de fluide cryogénique (451) au niveau du joint à recouvrement adhésif (119, 403) ;
dans lequel le positionnement de l'émetteur de fluide (450) et l'émission du courant de fluide cryogénique (451) comprennent l'orientation de l'émetteur de fluide (450) de sorte qu'un angle entre le courant de fluide cryogénique (451) et le joint à recouvrement adhésif (119, 403) est inférieur à 45 degrés.

2. Procédé selon la revendication 1, dans lequel l'émission du courant de fluide cryogénique (451) comprend la régulation du courant de fluide cryogénique (451) de manière à atténuer l'érosion d'au moins l'un du premier élément (401, 110) et du second élément (402, 112).

3. Procédé selon la revendication 1 ou 2, dans lequel le premier élément est un corps de surface portante (110) et le second élément est une enveloppe (120) disposée le long d'un bord d'attaque du corps de surface portante (110).

4. Procédé selon la revendication 3, dans lequel l'enveloppe (112) est collée par adhésif au corps de surface portante (110) par l'intermédiaire du joint à recouvrement adhésif (119, 403) ; et
dans lequel l'émetteur de fluide (450) est positionné par rapport au corps de surface portante (110).

5. Procédé selon la revendication 1, dans lequel le positionnement de l'émetteur de fluide (450) et l'émission du courant de fluide cryogénique (451) comprennent l'orientation de l'émetteur de fluide (450) de sorte que l'angle entre le courant de fluide cryogénique (451) et le joint à recouvrement adhésif (119, 403) est inférieur à 30 degrés.

6. Procédé selon la revendication 1, dans lequel le positionnement de l'émetteur de fluide (450) et l'émission du courant de fluide cryogénique (451) comprennent l'orientation de l'émetteur de fluide (450) de sorte que l'angle entre le courant de fluide cryogénique (451) et le joint à recouvrement adhésif (119, 403) est inférieur à 20 degrés.

7. Procédé selon une quelconque revendication précédente, dans lequel le procédé comprend en outre le positionnement d'un déflecteur (460) par rapport à l'ensemble de joints à recouvrement (100, 400) de sorte que le courant de fluide cryogénique (451) détourne le déflecteur (460) avant de heurter le joint à recouvrement adhésif (119, 403).

8. Procédé selon la revendication 7, dans lequel le déflecteur (460) a une surface de déflexion incurvée pour faciliter la concentration du courant de fluide cryogénique (451) au niveau du joint à recouvrement adhésif (119, 403).

9. Procédé selon une quelconque revendication précédente, dans lequel une pression du fluide cryogénique est entre environ 12 000 psi (80 mégapascals) et environ 52 000 psi (360 mégapascals).

10. Procédé selon une quelconque revendication précédente, dans lequel le courant de fluide cryogénique (451) comprend de l'azote liquide.

11. Procédé selon une quelconque revendication précédente, dans lequel l'enveloppe (112) et le corps de surface portante (110) ont des caractéristiques de dilatation thermique différentes.

12. Procédé de réparation d'un ensemble de surface portante (100), comprenant le procédé selon la revendication 4, et comprenant en outre
le retrait mécanique de l'enveloppe (112) du corps de surface portante (110) ; et
le collage par adhésif d'une enveloppe (112) de remplacement au corps de surface portante (110).
